Europäisches Patentamt

European Patent Office

Office européen des brevets

(11) Veröffentlichungsnummer: **0 265 417**
**A2**

(12) **EUROPÄISCHE PATENTANMELDUNG**

(21) Anmeldenummer: **87890224.6**

(22) Anmeldetag: **12.10.87**

(51) Int. Cl.⁴: **B 61 K 9/06**
**G 01 J 5/08**

(30) Priorität: **17.10.86 AT 2771/86**

(43) Veröffentlichungstag der Anmeldung:
**27.04.88 Patentblatt 88/17**

(84) Benannte Vertragsstaaten:
**CH DE FR GB IT LI SE**

(71) Anmelder: **VOEST-ALPINE Aktiengesellschaft**
**Turmstrasse 44**
**A-4020 Linz (AT)**

(72) Erfinder: **Dührkoop, Jens, Dipl.-Ing.**
**Werderstrasse 48**
**D-6900 Heidelberg (DE)**

(74) Vertreter: **Kretschmer, Adolf, Dipl.-Ing. et al**
**Patentanwälte Dipl.Ing. A. Kretschmer Dr. Thomas M.**
**Haffner Schottengasse 3a**
**A-1014 Wien (AT)**

(54) **Einrichtung zum Erfassen von unzulässig erwärmten Radlagern und/oder Radreifen.**

(57) Bei einer Einrichtung zum Erfassen von unzulässig erwärmten Radlagern und/oder Radreifen von Schienenfahrzeugen ist zum Erfassen der Meßstelle auch bei Verschiebung der Radachsen in axialer Richtung in den Strahlengang von der Meßstelle zum Wärmestrahlungsfühler eine die Abbildung verzerrende, insbesondere wenigstens einachsig verbreiternde Einrichtung eingeschaltet. Eine derartige Einrichtung kann von einem verzerrenden optischen Element (6) gebildet sein, welches die Abbildung eines entsprechend verbreiterten Feldes (4) ermöglicht.

FIG. 1

EP 0 265 417 A2

## Beschreibung

Einrichtung zum Erfassen von unzulässig erwärmten Radlagern und/oder Radreifen

Die Erfindung bezieht sich auf eine Einrichtung zum Erfassen von unzulässig erwärmten Radlagern und/oder Radreifen von Schienenfahrzeugen mit einem im Gleisbereich ortsfest angeordneten Wärmestrahlungsfühler.

Eine Einrichtung der eingangs genannten Art ist beispielsweise der DE-OS 29 07 945 zu entnehmen. Als Wärmestrahlungsfühler werden in diesem Zusammenhang gekühlte Detektoren eingesetzt. Neben den als Detektor üblicherweise thermischen Detektoren (z.B. Bolometern) gibt es eine Gruppe von rasch ansprechenden Wärmestrahlungsfühlern, wie beispielsweise HgCd : HgTe, InSb, PbSe oder Kombinationen derartiger Halbleiter. Derartige Halbleiter-Detektoren sprechen schnell auf Strahlungsänderungen an und sind für die kontinuierliche Erfassung eines bestimmten Temperaturniveaus ohne zusätzliche Einrichtungen, wie beispielsweise Modulatoren, welche den einfallenden Strahl zyklisch unterbrechen, nicht geeignet.

Derartige Einrichtungen werden üblicherweise im Gleisbereich angeordnet und der Meßstrahl gelangt entweder vertikal oder unter einem von der Vertikalen abweichenden Richtung durch ein Fenster der Einrichtung und entsprechende Umlenkeinrichtungen auf den gekühlten Detektor.

Die Räder von Eisenbahnwaggons weisen leicht konische Radlaufflächen auf und der Abstand der Radkränze voneinander ist geringer als die Spurweite. Daraus resultiert ein sogenannter Sinuslauf der Räder, welcher eine axiale Verschiebung der Radachsen entsprechend einer Sinusschwingung zur Folge hat. Da der Meßwinkel bekannter Einrichtungen relativ klein ist, um die entsprechende Empfindlichkeit sicherzustellen, wird somit bei zeitlich aufeinanderfolgenden Achsen eine unterschiedliche Stelle des Radlagers relativ zum Lagergehäuse als Meßstelle herangezogen. Da auch bei unzulässiger Erwärmung von Radlagern die von einzelnen Teilen des Radlagers abgestrahlte Wärme in Achsrichtung verschieden sein kann, lassen sich aufgrund des Sinuslaufes der Räder und damit der Lager nicht ohne weiteres reproduzierbare Aussagen treffen.

Die Erfindung zielt nun darauf ab, eine Einrichtung der eingangs genannten Art dahingehend weiter zu bilden, daß bei jewählter Justierung auch Abweichungen der Meßstelle, wie sie sich durch den Sinuslauf der Räder ergeben, sicher erfaßt werden können. Zur Lösung dieser Aufgabe besteht die erfindungsgemäße Einrichtung im wesentlichen darin, daß in den Strahlengang von der Meßstelle zum Wärmestrahlungsfühler eine die Abbildung verzerrende, insbesondere wenigstens einachsig verbreiternde, Einrichtung eingeschaltet ist. Dadurch, daß eine die Abbildung verzerrende Einrichtung eingeschaltet ist, läßt sich der Sehkegel des Detektors verbreitern und es kann auch bei Verschiebung der Achse entsprechend dem Sinuslauf der Räder und damit bei einer Verschiebung des Lagers sichergestellt werden, daß auch die heißesten Stellen des Lagers sicher gemessen werden. Eine derartige Verbreiterung des Sehkegels erleichtert hiebei die Justierung der Einrichtung und erlaubt es auch, unterschiedliche Lagerkonstruktionen über die in Frage kommende axiale Länge, an welcher die maximale Erwärmung bei einem schadhaften Lager auftreten würde, sicher abzutasten. Eine derartige die Abbildung verzerrende Einrichtung kann durch verschiedene konstruktive Maßnahmen verwirklicht werden. Um die Empfindlichkeit der Einrichtung nicht wesentlich herabzusetzen, wird mit Vorteil eine einachsige Verzerrung gewählt, bei welcher der Sehkegel in Achsrichtung der Radachsen aufgeweitet wird, wohingegen er in Fahrtrichtung des Zuges relativ eng gewählt werden kann. Diese Kegelerweiterung hat naturgemäß zur Folge, daß auch Bereiche mit geringerer Erwärmung mitgemessen werden, jedoch kann die daraus resultierende Empfindlichkeit bei einachsiger Verbreiterung des Sehkegels mit entsprechend empfindlichen Detektoren ohne weiteres in Kauf genommen werden. Der gegenüberstehende Vorteil der sicheren Erfassung von heißen Stellen auch bei axialer Verschiebung des heißesten Punktes, beispielsweise auf Grund des Sinuslaufes der Räder, überwiegt in jedem Fall den Nachteil der geringfügig geringeren Empfindlichkeit.

Eine besonders einfache Einrichtung zur einachsigen Verbreiterung der Abbildung kann dadurch erzielt werden, daß die verzerrende Einrichtung von einem Schwingspiegel gebildet ist. Die Schwenkachse eines derartigen Schwingspiegels muß hiebei die Achsen der Räder kreuzen, um eine einachsige Verbreiterung über die Lagerlänge zu erzielen. Insbesondere bei schnell fahrenden Zügen, beispielsweise im Geschwindigkeitsbereich von etwa 350 km/h stehen für die Abtastung eines Lagers dessen Außenabmessungen üblicherweise zwischen 20 und 30 cm betragen können, etwa 3 msec. zur Verfügung. Daraus resultiert, daß bei Verwendung eines Schwingspiegels zur einachsigen Verbreiterung der Abbildung relativ hohe Schwingungsfrequenzen gewählt werden müssen, um innerhalb der für ein Lager zur Verfügung stehenden Meßzeit eine einachsige Verbreiterung zu erzielen. Es kann daher in solchen Fällen vorteilhaft sein, vor dem Schwingspiegel bereits eine fokusierende Optik anzuordnen, so daß die Masse des schwingenden Spiegels bzw. Größe des schwingenden Spiegels ebenso wie die Schwingungsamplitude gering gehalten werden kann, wodurch mit geringen mechanischen Antriebskräften hohe Schwingungsfrequenzen erzielt werden können.

Eine besonders einfache Ausgestaltung einer derartigen verzerrenden Einrichtung kann dadurch aufgebaut werden, daß optische Elemente mit von der Rotationssymmetrie bezüglich der optischen Achse abweichenden Flächen angeordnet werden. Eine derartige optische Elemente enthaltende Einrichtung kann beispielsweise so ausgestaltet sein, daß wenigstens eine Zylinderlinse oder wenigstens ein Zylinderspiegel angeordnet wird. Derartige Krümmungsflächen mit geradlinigen Erzeugenden führen zu einer ausschließlich einachsigen Verzerrung, wodurch die geringste Einbuße der Meßempfindlichkeit erzielt wird.

In besonders einfacher Weise kann die Einrichtung so ausgestaltet sein, daß als verzerrende Einrichtung ein anamorphotisches IR-Objektiv oder eine afokale anamorphotische IR-Optik und ein IR-Objektiv eingesetzt ist. Bei derartigen anamorphotischen IR-Objektiven bzw. afokalen anamorphotischen IR-Optiken in Kombination mit einem IR-Objektiv kann die einmal gewählte Justierung die gewünschte Abtastbreite bzw. Verbreiterung des Sehkegels über die axiale Länge des Lagers ohne zusätzliche Justierungsarbeiten ergeben. Im Falle der Verwendung eines Schwingspiegels läßt sich die Anordnung noch dahingehend optimieren, daß der Umkehrpunkt der Schwingung des Schwingspiegels so gewählt wird, daß er mit höherer Wahrscheinlichkeit den heißesten Punkt eines Lagers erfaßt. Im Umkehrpunkt selbst ist die Verweildauer am längsten und es kann daher eine gewichtete Auswertung der gemessenen Strahlung durch entsprechende Justierung des Schwingspiegels vorgenommen werden. Schwingende Spiegel haben darüberhinaus den Vorzug, ein gewisses Maß an Selbstreinigung zu zeigen.

Derartige Einrichtungen können prinzipiell auch ohne Modulation Signale ergeben, da sie auf eine Temperaturänderung durch ein in den Sehkegel bewegtes Lager rasch genug ansprechen. Eine Modulation der durch die Optik auf den Detektor abgebildeten Strahlung kann sich als vorteilhaft erweisen, wenn beispielsweise die Umgebungstemperatur als zusätzliches Signal ausgewertet werden soll. Während nämlich kontinuierliche Vorgänge von raschen Detektoren der eingangs genannten Art nicht ohne weiteres ausgewertet werden können, kann ein moduliertes, beispielsweise durch eine rotierende Schlitzscheibe zyklisch unterbrochenes Signal in den Phasen in welchen der Sehkegel nicht auf ein Lager trifft, gleich falls Meßwerte liefern, welche dann der Umgebungstemperatur entsprechen. Bei Verwendung eines derartigen Modulators wird aber nun nicht nur die Umgebungstemperatur meßbar, sondern auch das Signal dann, wenn ein Lager in den Sehkegel tritt, entsprechend in Teilsignale unterteilt. Bei geeigneter Anordnung einer rotierenden Modulatorscheibe und Messung unter Echtzeitbedingungen, insbesondere bei entsprechend gewählter Rotationsgeschwindigkeit der Modulatorscheibe, läßt sich auf diese Weise auch ein Temperaturprofil über die Lagerlänge ermitteln, wenn die Rotation schnell genug gewählt ist um innerhalb der Meßzeit, welche für ein Lager zur Verfügung steht, mehrere Meßwerte zu ergeben. Zu diesem Zweck ist mit Vorteil die Ausbildung so getroffen, daß eine rotierende Modulatorscheibe im Strahlengang angeordnet ist, deren Rotationsachse die Längsachse der durch die verzerrende Einrichtung erzielten Abbildungsverbreiterung, vorzugsweise ungefähr rechtwinkelig, kreuzt. Mit Vorteil ist hiebei die Modulatorscheibe zwischen der verzerrenden Einrichtung und dem Wärmestrahlungsfühler angeordnet.

Um eine definierte Messung an mehreren Orten eines Lagers exakt zu ermöglichen, kann die Ausbildung mit Vorteil so getroffen sein, daß in Abtastrichtung der Modularscheibe mehrere Detektorelemente in einem Detektor nebeneinander angeordnet sind, die nacheinander von der Strahlung beaufschlagt werden.

In besonders einfacher Weise kann eine derartige Modulatorscheibe radiale Schlitze aufweisen, deren Breite kleiner ist als die Längsachse der Abbildungsverbreiterung.

Die Ausbildung der Auswerteschaltung bzw. der Elektronik für die Auswertung der vom Detektor abgegebenen Signale kann in konventioneller Weise nach dem Stand der Technik getroffen sein.

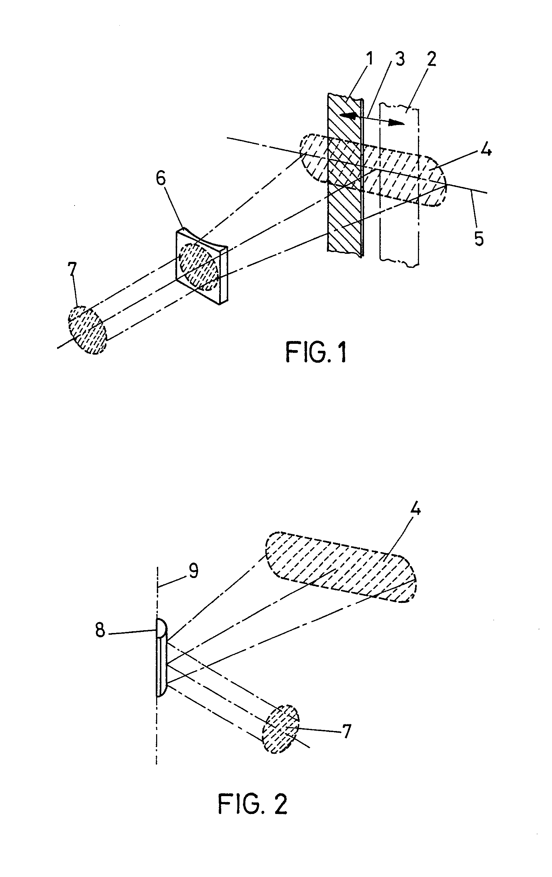

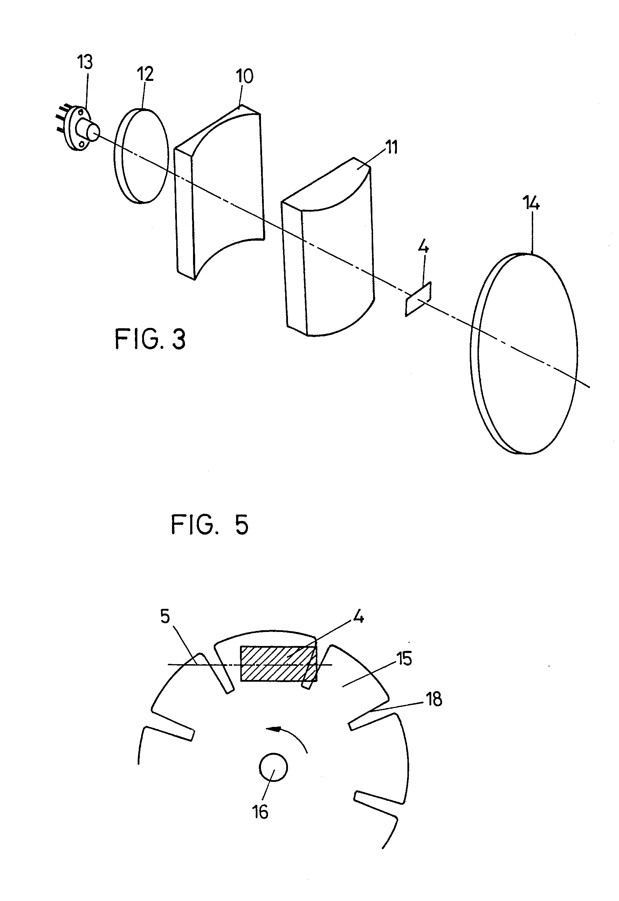

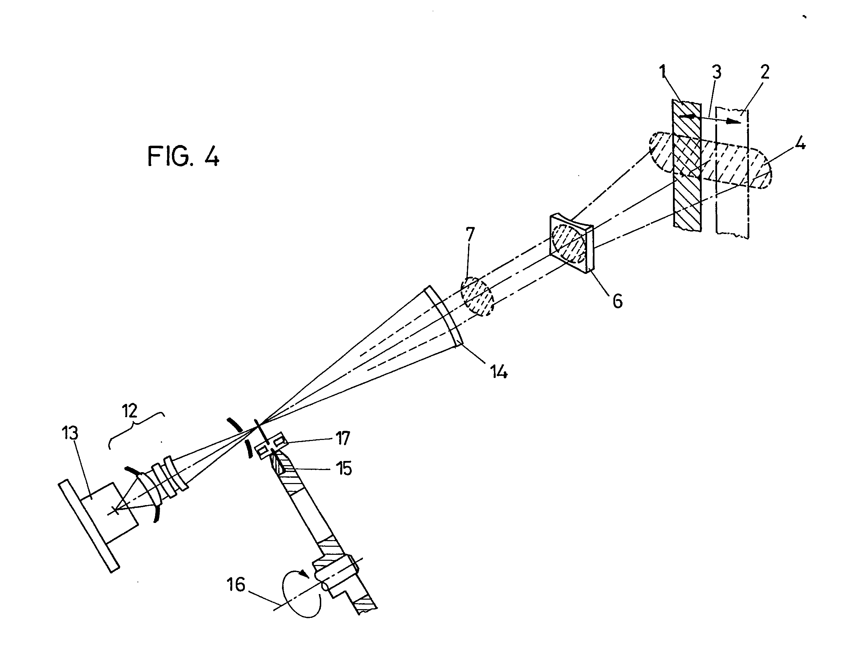

Die Erfindung wird nachfolgend an Hand von in der Zeichnung schematisch dargestellten Ausführungsbeispielen näher erläutert. In dieser zeigen Fig.1 eine erste schematische Darstellung einer verzerrenden Einrichtung, Fig.2 eine abgewandelte Ausbildung einer Einrichtung nach Fig.1 in perspektivischer Ansicht, Fig.3 perspektivische Darstellung eines erfindungsgemäß verwendbaren afokalen anamorphotischen Systems in Verbindung mit einer Optik, Fig.4 eine schematische Darstellung einer Einrichtung mit einer Modulatorscheibe und Fig.5 eine vergrößerte Ansicht eines Teiles der Modulatorscheibe in Richtung der Rotationsachse derselben.

In Fig.1 sind Teilbereichspositionen 1 und 2 eines Lagers über die Lagerlänge eingetragen, welche auf Grund des Sinuslaufes der Räder in Richtung des Doppelpfeiles 3 zwischen den Positionen 1 und 2 hin- und herwandern können. Um eine sichere Abtastung beliebiger Positionen des Lagers zu gewährleisten, wird das Sehfeld 4 entsprechend der Darstellung in Fig.1 in Richtung der Achse 5 einachsig verbreitert. Zu diesem Zweck ist ein verzerrendes optisches Element 6 vorgesehen, welches von einer Zylinderlinse gebildet ist. Dieses verzerrende Element 6 führt zu einer Abbildung des verbreiterten Feldes 4 mit im wesentlichen kreissymmetrischer Gestalt, wie sie durch den Strahlungsquerschnitt 7 schematisch angedeutet ist.

Bei der Darstellung nach Fig.2 ist anstelle der Zylinderlinse 6 ein Spiegel, insbesondere ein Zylinderspiegel 8 vorgesehen. Der Strahlungsquerschnitt ist wiederum mit 7 bezeichnet. Je nach Ausgestaltung des Spiegels 8 ergibt sich eine mehr oder minder große Verbreiterung des Sehkegels und es kann anstelle eines stationären Spiegels mit im wesentlichen konvexer Krümmung ein planer oder sogar konkaver Schwingspiegel an der Stelle des Spiegels 8 vorgesehen sein. In diesem Falle erfolgt die Schwingung um die mit 9 bezeichnete Schwingungsachse und im Falle der Verwendung einer konkaven Ausgestal tung für einen derartigen Schwingspiegel handelt es sich bei einem derartigen Schwingspiegel um ein fokusierendes Element, welches in vorgegebenem Abstand unmittelbar ein Bild entwerfen kann.

Bei der Darstellung nach Fig.3 sind Zylinderlinsen 10 und 11 zur Ausbildung eines afokalen Systemes angeordnet, wobei die Abbildung durch eine Infrarotoptik 12 auf den dahinterliegenden Detektor 13 erfolgt. Das Sehfeld ist schematisch wiederum mit 4 angedeutet, wobei die Ausgestaltung auch so getroffen sein kann, daß die Linse 12 als Bildfeldlinse ausgebildet ist und eine Objektivlinse 14 in den Strahlengang zwischen Lager bzw. Radlauffläche und Detektor 13 eingeschaltet ist.

Bei der Darstellung nach Fig.4 ist in den Strahlengang zwischen der Objektivlinse 14 und der Abbildungsoptik 12 ein rotierender Modulator eingeschaltet, welcher eine rotierende Modulatorscheibe 15 enthält. Die Rotationsachse der Modulatorscheibe 15 ist mit 16 bezeichnet. Am Außenumfang der Modulatorscheibe sind radiale Schlitze vorgesehen, welche den Strahlengang entsprechend der gewählten Rotationsgeschwindigkeit zyklisch unterbrechen. Mit einer Lichtschranke 17 läßt sich ein Synchronisierungssignal gewinnen, welches der Umdrehungsgeschwindigkeit der Modulatorscheibe proportional ist. Die Modulatorscheibe ist vergrößert in Fig.5 dargestellt. Die sich in radialer Richtung sich erstreckenden Schlitze der Modulatorscheibe 15 sind mit 18 bezeichnet und durch die in Fig.4 gezeigte Anordnung der Modulatorscheibe wird nun durch diese Schlitze 18 das Sehfeld 4 sequenziell abgetastet, so daß eine Mehrzahl von unterschiedlichen Meßwerten erzielt wird, wenn über die Länge des Sehfeldes 4 entlang der Achse 5 über welche das Sehfeld verbreitert ist unterschiedliche Temperaturniveaus gemessen werden. Ein derartiges Signal ergibt somit ein Temperaturprofil über die Länge der Sehfeldverbreiterung 4 und damit über die Lagerlänge.

## Patentansprüche

1. Einrichtung zum Erfassen von unzulässig erwärmten Radlagern und/oder Radreifen von Schienenfahrzeugen mit einem im Gleisbereich ortsfest angeordneten Wärmestrahlungsfühler, dadurch gekennzeichnet, daß in den Strahlengang von der Meßstelle zum Wärmestrahlungsfühler (13) eine die Abbildung verzerrende, insbesondere wenigstens einachsig verbreiternde, Einrichtung (6,8,10,11) eingeschaltet ist.

2. Einrichtung nach Anspruch 1, dadurch gekennzeichnet, daß die verzerrende Einrichtung von einem Schwingspiegel (8) gebildet ist.

3. Einrichtung nach Anspruch 1, dadurch gekennzeichnet, daß die verzerrende Einrichtung optische Elemente mit von der Rotationssymmetrie bezüglich der optischen Achse abweichenden Flächen enthält.

4. Einrichtung nach Anspruch 3, dadurch gekennzeichnet, daß die verzerrende Einrichtung wenigstens eine(n) Zylinderlinse (6,10,11) und/oder Zylinderspiegel (8) enthält.

5. Einrichtung nach einem der Ansprüche 1 bis 4, dadurch gekennzeichnet, daß die verzerrende Einrichtung ein anamorphotisches IR-Objektiv oder eine afokale anamorphotische IR-Optik und ein IR-Objektiv eingesetzt ist.

6. Einrichtung nach einem der Ansprüche 1 bis 5, dadurch gekennzeichnet, daß eine rotierende Modulatorscheibe (15) im Strahlengang angeordnet ist, deren Rotationsachse (16) die Längsachse der durch die verzerrende Einrichtung erzielten Abbildungsverbreiterung, vorzugsweise ungefähr rechtwinkelig, kreuzt.

7. Einrichtung nach Anspruch 6, dadurch gekennzeichnet, daß die Modulatorscheibe (15) zwischen der verzerrenden Einrichtung (6) und dem Wärmestrahlungsfühler (13) angeordnet ist.

8. Einrichtung nach Anspruch 6 oder 7, dadurch gekennzeichnet, daß in Abtastrichtung der Modulatorscheibe (15) mehrere Detektorelemente in einem Detektor nebeneinander angeordnet sind, die nacheinander von der Strahlung beaufschlagt werden.

9. Einrichtung nach Anspruch 6, 7 oder 8, dadurch gekennzeichnet, daß die Modulatorscheibe (15) radiale Schlitze (18) aufweist, deren Breite kleiner als die Längsachse der Abbildungsverbreiterung ist.

0265417

FIG. 1

FIG. 2

0265417

FIG. 3

FIG. 5

FIG. 4